# EUROPÄISCHE PATENTSCHRIFT

(11) **EP 4 257 391 B1**
(45) Veröffentlichungstag und Bekanntmachung des Hinweises auf die Patenterteilung: **10.12.2025**
(21) Anmeldenummer: 22166955.9
(22) Anmeldetag: 06.04.2022
(51) Int. Cl.: B60K 1/04, H01M 10/613, H01M 10/625, H01M 10/6554, H01M 10/6556, H01M 50/204, H01M 50/224, H01M 50/249, H01M 50/258, H01M 50/291, B60K 1/00, B60K 11/02

(54) **EINSTÜCKIGER BATTERIETRÄGER SOWIE VERFAHREN ZUM DRUCKGIESSEN EINES EINSTÜCKIGEN BATTERIETRÄGERS**
SINGLE-SECTION BATTERY CARRIER AND METHOD OF DIECASTING A SINGLE-SECTION BATTERY CARRIER
PORTE-BATTERIE MONOBLOC, AINSI QUE PROCÉDÉ DE MOULAGE SOUS PRESSION D'UN PORTE-BATTERIE MONOBLOC

(43) Veröffentlichungstag der Anmeldung: 11.10.2023
(73) Patentinhaber: Nemak, S.A.B. de C.V., 66017 García, Nuevo León (MX)
(72) Erfinder: CZORNY, Lucjan, 43-502 Czechowice-Dziedzice (PL); HEUEIS, Stefan, 61440 Oberursel (DE); LIST, Sascha Florian, 65510 Idstein (DE); SCHEIL, Dr. Jan, 65185 Wiesbaden (DE); MÜLLER, Andreas, 65428 Rüsselsheim (DE)
(74) Vertreter: Cohausz & Florack

(56) Entgegenhaltungen:
- WO-A1-2021/003299
- DE-A1- 102016 115 627
- DE-A1- 102018 210 124
- DE-A1- 102019 102 754
- DE-B3- 102016 115 611

## Beschreibung

Die vorliegende Erfindung betrifft einen Batterieträger zur Aufnahme zumindest eines als Antriebsenergiespeicher für ein elektrisch angetriebenes Fahrzeug dienenden Batteriemoduls, wobei der Batterieträger mit einem Chassis des Fahrzeugs verbindbar ist, umfassend: eine im Wesentlichen umlaufende Rahmenstruktur aufweisend Längsseiten und Querseiten. Die vorliegende Erfindung betrifft ebenfalls ein Verfahren zum Druckgießen eines im Wesentlichen einstückigen Batterieträgers nach einem der Ansprüche 1 bis 14, aus einer Leichtmetallschmelze, insbesondere aus einer Schmelze einer Aluminiumlegierung.

Elektrisch angetriebene Fahrzeuge der hier in Rede stehenden Art führen in der Regel eine Mehrzahl an Batteriemodulen umfassend Batteriezellen mit sich, die als Antriebsenergiespeicher dienen und die für den Fahrbetrieb benötigte elektrische Energie zur Verfügung stellen. Insbesondere handelt es sich bei einem elektrisch angetriebenen Fahrzeug der hier in Rede stehenden Art um ein Elektroauto, welches im Wesentlichen ausschließlich von einem Elektromotor angetrieben wird. Alternativ kann der vorgenannte Batterieträger auch bei einem Hybrid-Fahrzeug eingesetzt werden, welches zusätzlich zu einem Elektromotor noch einen Verbrennungsmotor aufweist.

Da Batteriemodule regelmäßig ein hohes Gewicht aufweisen, stellt ihre Platzierung im Fahrzeug nicht nur aus statischer Sicht hohe Anforderungen an die Tragstruktur des Fahrzeugs, sondern beeinflusst zusätzlich auch die im Fahrbetrieb auftretenden dynamischen Kräfte.

Im Hinblick auf das Fahrverhalten hat sich eine Platzierung der einzelnen Batteriemodule im Bodenbereich des Fahrzeugs herausgestellt. Um dies zu ermöglichen, sind Batterieträger vorgeschlagen worden, die im Wesentlichen flach und plattenartig ausgebildet sind. Derartige Batterieträger lassen sich im Bodenbereich des Fahrzeugs anordnen und mit dem Chassis des Fahrzeugs verbinden.

An die statische und dynamische Belastbarkeit voranstehend erläuterter Batterieträger werden demnach erhebliche Anforderungen gestellt. So soll der Batterieträger nicht nur in der Lage sein, die einzelnen Batteriemodule zu tragen, sondern auch die dynamischen Lasten aufnehmen, die im Fahrbetrieb des Fahrzeugs entstehen. Ebenfalls soll der Batterieträger die aufgenommenen und leicht entzündlichen Batteriemodule im Falle eines Unfalls bestmöglich schützen.

Demnach stellen Batterieträger ein für die Sicherheit und Funktionsfähigkeit von Fahrzeugen entscheidendes Bauteil dar. Derartige Anforderungen an die Herstellung von Batterieträgern führen mitunter zur Vorsehung von komplexen Geometrien der Batterieträger. Bedingt durch die komplexen Geometrien der Batterieträger werden Fertigungsverfahren angewendet, bei denen in aufwändiger Weise mehrere Bauteile miteinander verbunden, insbesondere miteinander verschweißt, werden müssen. Solche Fertigungsverfahren führen zu erhöhten Kosten bei der Herstellung der Batterieträger und zudem sind die Verbindungsstellen häufig als Schwachstellen in Bezug auf die mechanische Belastbarkeit der Batterieträger anzusehen.

Neben den vorgenannten Aspekten wird weiterhin eine Reduktion des Gewichts der in Rede stehenden Batterieträger angestrebt. Dies gestaltet sich als weitere Herausforderung, da trotz einer Gewichtsreduktion die vorgenannten Anforderungen an die statische und dynamische Belastbarkeit von Batterieträger erfüllt werden sollen.

DE 10 2016 115627 A1 offenbart einen Batterieträger 1, welcher eine Wanne 3 mit einem umlaufenden Rahmen 4 und einem doppellagigen Boden 8 aufweist, wobei in dem Boden 8 ein Kühlsystem 42 aus mehreren Bodenlagen 37 und 38 integriert ist.

DE 10 2019 102754 A1 offenbart eine einstückige Kühlplattenoberfläche einer Kühlplatte einer Batterieträgeranordnung sowie eine einstückig mit einem Deformationsrahmen gebildete Aufnahmewanne, wobei die Aufnahmewanne als Faltbauteil oder als Tiefziehbauteil aus einem Blechzuschnitt ausgebildet ist.

DE 10 2018 210124 A1 offenbart einteilige Tragstrukturen, die innerhalb einer wannenförmigen Aufnahme umfassend zwei Gehäuselängsseiten und zwei Gehäusequerseiten angeordnet werden können, so dass derartige Tragstrukturen bei einem Crash in ein in der wannenförmigen Aufnahme angeordnetes Deformationselement gedrückt werden, um die aufgenommenen Batteriemodule vor einer Beschädigung zu schützen.

WO 2021/003299 A1 offenbart eine Profilstruktur eines Batterieträgers, wobei diese durch ein separates Bauteil vorgesehen wird, das in einen Rahmen des Batterieträgers eingesetzt wird.

Vor diesem Hintergrund hat sich die Aufgabe ergeben, einen Batterieträger der vorgenannten Art zur Verfügung zu stellen, welcher vorteilhafte statische und dynamische Eigenschaften sowie ein geringes Gewicht aufweist und zudem kostengünstig zu fertigen ist. Des Weiteren soll ein Verfahren zur Herstellung eines Batterieträgers zur Verfügung gestellt werden, welches eine kostengünstige Fertigung eines leichten Batterieträgers mit vorteilhaften statischen und dynamischen Eigenschaften ermöglicht.

Die vorgenannte Aufgabe wird erfindungsgemäß gemäß einem ersten Aspekt der vorliegenden Erfindung bei einem Batterieträger zur Aufnahme zumindest eines als Antriebsenergiespeicher für ein elektrisch angetriebenes Fahrzeug dienenden Batteriemoduls, wobei der Batterieträger mit einem Chassis des Fahrzeugs verbindbar ist, dadurch gelöst, dass der Batterieträger umfasst: eine umlaufende Rahmenstruktur aufweisend Längsseiten und Querseiten zur Bildung eines Aufnahmebereichs für das zumindest eine Batteriemodul, wobei der Batterieträger einstückig aus einem Leichtmetallwerkstoff gegossen ist, und wobei der Aufnahmebereich eine Fläche von mindestens 0,5 m², insbesondere von zumindest 0,75 m², besonders bevorzugt von zumindest 1 m² einschließt

Durch die einstückige Ausbildung des Batterieträges lässt sich in kostengünstiger Weise, nämlich vorzugsweise durch ein Druckgussverfahren, ein Batterieträger herstellen, welcher kostengünstig zu fertigen ist und zusätzlich vorteilhafte statische und dynamische Eigenschaften aufweist. Es hat sich überraschenderweise gezeigt, dass auch ein Batterieträger mit einem relativ großen Aufnahmebereich, welcher insbesondere für die Aufnahme von Batteriemodulen eines rein elektrisch angetriebenen Fahrzeugs benötigt wird, einstückig gefertigt werden kann. Durch die einstückige Fertigung eines solchen Batterieträgers entfallen zum einen bestimmte Fertigungsschritte, da einzelne Komponenten des Batterieträgers nicht nachträglich miteinander verbunden werden müssen und zum anderen können anfällige Verbindungbereiche des Batterieträgers vermieden werden. Ein derartiger Batterieträger weist insbesondere vorteilhafte Eigenschaften bezüglich der Biegesteifigkeit und der Torsionssteifigkeit auf.

Dabei ist die von dem Aufnahmebereich eingeschlossene Fläche vorzugsweise diejenige Fläche, die im eingebauten Zustand des Batterieträgers in einem Fahrzeug im Wesentlichen horizontal zwischen der umlaufenden Rahmenstruktur verläuft und durch welche demnach zumindest ein Batteriemodul aufgenommen werden kann. Insbesondere wird die Fläche des Aufnahmebereichs von der umlaufenden Rahmenstruktur umschlossen, wobei die Fläche des Aufnahmebereichs vorzugsweise durch die inneren Seitenflächen der Längsseiten und durch die inneren Seitenflächen der Querseiten der umlaufenden Rahmenstruktur begrenzt wird und sich demnach insbesondere innerhalb der inneren Seitenflächen der Längsseiten und der Querseiten der Rahmenstruktur erstreckt.

Des Weiteren ist es bevorzugt, dass der Aufnahmebereich eine Fläche von mindestens 1,25 m², vorzugsweise von zumindest 1,5 m², insbesondere von zumindest 1,75 m², besonders bevorzugt von zumindest 2 m² einschließt. Beispielsweise weisen die Längsseiten eine Länge von größer als 1 m, insbesondere von größer als 1,2 m, besonders bevorzugt von größer als 1,5 m auf und/oder die Querseiten weisen eine Länge von größer als 1 m, insbesondere von größer als 1,25 m, besonderes bevorzugt von größer als 1,4 m auf.

Vorzugsweise ist die umlaufende Rahmenstruktur im Wesentlichen rechteckig gebildet, wobei die Längsseiten jeweils im Wesentlichen parallel zueinander verlaufen und/oder wobei die Querseiten im Wesentlichen parallel zueinander verlaufen.

Des Weiteren ist es bevorzugt, dass die Rahmenstruktur zwischen den Längsseiten und zumindest einer Querseite Übergangsbereiche aufweist: Das Vorsehen derartiger Übergangsbereiche kann in Abhängigkeit der jeweiligen Einbausituation sowie hinsichtlich der Crash-Eigenschaften des Batterieträgers vorteilhaft sein. Die Übergangsbereiche können beispielsweise als kurvenförmig verlaufende Abschnitte der Rahmenstruktur ausgebildet sein, welche die Längsseiten und zumindest eine Querseite miteinander verbinden. Insbesondere können die Übergangsbereiche auch in Form eines Kreisbogens verlaufen. Alternativ dazu können die Übergangsbereiche der Rahmenstruktur auch im Wesentlichen gerade ausgestaltet sein, wobei die Innenseite der Übergangsbereiche mit der Innenseite der Längsseiten und/oder der Innenseite der zumindest einen Querseite einen Winkel von weniger als 180° einschließt.

Der Batterieträger weist zumindest einen Quersteg und/oder zumindest einen Längssteg zur Versteifung des Batterieträgers und/oder zur Anbindung des Batterieträgers an das Chassis des Fahrzeugs auf. Durch die Vorsehung von zumindest einem Quersteg und/oder zumindest einem Längssteg kann der Batterieträger hinsichtlich seiner statischen und dynamsichen Eigenschaften weiter verstärkt werden. Ebenfalls kann der zumindest eine Quersteg und/oder der zumindest eine Längssteg dazu genutzt werden, den Batterieträger an das Chassis eines Fahrzeugs anzubinden. Insbesondere können durch den zumindest einen Quersteg und/oder durch den zumindest einen Längssteg Abschnitte innerhalb der Rahmenstruktur des Batterieträgers vorgesehen werden, die zur Aufnahme von einzelnen Batteriemodulen genutzt werden können.

Hierbei ist es ferner bevorzugt, dass der zumindest eine Quersteg im Wesentlichen parallel zu zumindest einer Querseite der Rahmenstruktur verläuft und/oder der zumindest eine Längssteg im Wesentlichen parallel zu zumindest einer Längsseite der Rahmenstruktur verläuft. Dies ermöglicht eine vorteilhafte Anordnung des Batterieträgers in dem Fahrzeug sowie eine platzoptimierte Aufnahme von in der Praxis üblicherweise verwendeten Batteriemodulen in dem Aufnahmebereich des Batterieträgers.

Nach einer weiteren vorteilhaften Ausgestaltung der Erfindung bilden zumindest zwei, insbesondere im Wesentlichen nebeneinander angeordnete, Rippen den zumindest einen Quersteg und/oder den zumindest einen Längssteg. Indem zwei Rippen zur Bildung zumindest eines Querstegs und/oder zumindest eines Längsstegs vorgesehen werden, kann die Steifigkeit des Batterieträgers weiter verbessert werden.

Diesbezüglich ist es weiter bevorzugt, dass die zumindest zwei Rippen derart zueinander angeordnet sind, dass der Quersteg und/oder der Längssteg eine Mehrzahl an im Wesentlichen O-förmigen Rippenstrukturen, vorzugsweise eine Mehrzahl an im Wesentlichen in einer Reihe angeordneten O-förmigen Rippenstrukturen, aufweist. Indem die zwei Rippen eine vorgenannte Anordnung aufweisen, kann die Fertigung des zumindest einen Querstegs und/oder des zumindest einen Längsstegs insbesondere in gusstechnischer Hinsicht verbessert werden. Vorzugsweise sind die Rippenstrukturen in Form von mehreren hintereinander angeordneten, länglichen O-förmigen Rippenstrukturen gebildet. Zur Verbesserung der durch die Rippenstrukturen zur Verfügung gestellten statischen und dynamischen Eigenschaften des Batterieträgers ist es vorteilhaft, die einzelnen O-förmigen Rippenstrukturen mittig mit einem im Wesentlichen orthogonal zu der länglichen Erstreckung der Rippenstrukturen verlaufenden Steg zu verbinden.

Eine weitere vorteilhafte Ausgestaltung der Erfindung ist dadurch gekennzeichnet, dass mindestens ein Verbindungsabschnitt zur Verbindung des Batterieträgers mit dem Chassis des Fahrzeugs in einem Kreuzungsbereich des zumindest einen Querstegs mit dem zumindest einen Längssteg angeordnet ist. Eine derartige Positionierung ist in fertigungstechnischer Hinsicht, insbesondere in gusstechnischer Hinsicht, vorteilhaft, wobei zudem eine besonders stabile Anbindung an das Chassis des Fahrzeugs zur Verfügung gestellt werden kann. Vorzugsweise ist der mindestens eine Verbindungsabschnitt im Wesentlichen zylinderförmig ausgebildet.

Bei einer weiteren bevorzugten Ausgestaltung der Erfindung variiert die Höhe des zumindest einen Querstegs entlang der länglichen Erstreckung des zumindest einen Querstegs und/oder die Höhe des zumindest einen Längsstegs variiert entlang der länglichen Erstreckung des zumindest einen Längsstegs. Hierdurch kann die an der jeweiligen Stelle zur Verbesserung der Eigenschaften oder zur Anbindung des Batterieträgers an das Chassis benötigte Höhe des zumindest einen Querstegs und/oder des zumindest einen Längsstegs vorgesehen werden. Dies ermöglicht eine Reduktion des insgesamt verwendeten Material und des Gewichts des Batterieträgers Die Höhe des zumindest einen Querstegs und/oder des zumindest einen Längsstegs bezeichnet dabei vorzugweise die Erstreckung des zumindest einen Querstegs und/oder des zumindest einen Längsstegs im Wesentlichen orthogonal zu der Erstreckungsrichtung des zumindest einen Querstegs und/oder des zumindest einen Längsstegs.

Eine weitere bevorzugte Ausgestaltung der Erfindung ist dadurch gekennzeichnet, dass der zumindest eine Quersteg und/oder der zumindest eine Längssteg Verbindungsabschnitte zur Verbindung des Batterieträgers mit dem Chassis des Fahrzeugs aufweist, und dass die Höhe des zumindest einen Querstegs und/oder des zumindest einen Längsstegs in den Verbindungsabschnitten im Wesentlichen maximal ist und/oder dass die Höhe des zumindest einen Querstegs und/oder des zumindest einen Längsstegs im Wesentlichen mittig zwischen den Verbindungsabschnitten minimal ist. Hierdurch können in gusstechnischer Hinsicht optimierte Querstege und/oder Längsstege zur Verfügung gestellt werden, die bei einer Reduktion des benötigten Materials an den Verbindungsabschnitten eine ausreichende Festigkeit und Steifigkeit aufweisen. Die Höhe des zumindest einen Querstegs und/oder des zumindest einen Längsstegs bezeichnet dabei vorzugweise die Erstreckung des zumindest einen Querstegs und/oder des zumindest einen Längsstegs im Wesentlichen orthogonal zu der Erstreckungsrichtung des zumindest einen Querstegs und/oder des zumindest einen Längsstegs.

Die Außenseite der umlaufenden Rahmenstruktur weist zumindest teilweise eine Profilstruktur zur Versteifung des Batterieträgers auf. Vorzugsweise umfasst die Profilstruktur im Wesentlichen horizontal verlaufende Profilstege und/oder im Wesentlichen vertikal verlaufende Profilstege. Dabei bilden die im Wesentlichen horizontal und/oder vertikal verlaufenden Profilstege vorzugsweise im Wesentlichen ein Kastenprofil oder ein Wabenprofil. Durch die Vorsehung einer Profilstruktur können insbesondere Crash-Strukturen geschaffen werden, die etwaige bei einem Unfall des Fahrzeugs entstehende Kräfte aufnehmen und die in dem Batterieträger angeordneten Batteriemodule schützen. Insbesondere die Ausgestaltung der Profilstruktur als Kastenprofil oder Wabenprofil hat sich hinsichtlich einer gusstechnischen Fertigung als vorteilhaft ergeben.

Bei einer weiteren vorteilhaften Ausgestaltung der Erfindung variiert die Länge der im Wesentlichen horizontal verlaufenden Profilstege und/oder die Länge der im Wesentlichen vertikal verlaufenden Profilstege. Dies ermöglicht eine angepasste Profilstruktur, so dass die Rahmenstruktur bedarfsabhängig stärker oder weniger stark versteift werden kann. Hierdurch lassen sich die Crash-Eigenschaften der Profilstruktur weiter optimieren und das Gesamtgewicht des Batterieträgers reduzieren.

Eine weitere bevorzugte Ausgestaltung ist dadurch gekennzeichnet, dass der Batterieträger einstückig gegossen ist und dass die Profilstruktur im Wesentlichen vertikale Verstärkungsstege aufweist, wobei die im Wesentlichen vertikalen Verstärkungsstege Auswerfermarkierungen der umlaufenden Rahmenstruktur zugeordnet sind. Dies ermöglicht eine gezielte Verstärkung der Rahmenstruktur an den Auswerfermarkierungen, da die den Auswerfermarkierungen zugeordneten Bereiche der umlaufenden Rahmenstruktur regelmäßig eine verringerte Stabilität aufweisen.

Bei einer weiteren vorteilhaften Ausgestaltung der Erfindung umfasst der Batterieträger ferner einen Boden. Hierdurch können die einzelnen Batteriemodule in zuverlässiger Weise in dem Batterieträger angeordnet werden. Zudem kann hierdurch eine Beschädigung der Batteriemodule durch äußere Einwirkung, insbesondere gegen Steinschlag und Feuchtigkeit vorgesehen werden. Es ist bevorzugt, dass der Boden Kühlkanäle zur Kühlung von in dem Batterieträger aufgenommenen Batteriemodulen aufweist. Durch das Vorsehen von Kühlkanälen kann mittels des Batterieträgers bereits eine zuverlässige Kühlung zur Verfügung gestellt werden, ohne dass diese aufwändig nachgerüstet werden muss. Des Weiteren ist es bevorzugt, dass der Boden als Bestandteil des Batterieträgers einstückig mit dem Batterieträger geformt, insbesondere gegossen ist.

Eine weitere vorteilhafte Ausgestaltung der Erfindung ist dadurch gekennzeichnet, dass die umlaufende Rahmenstruktur, insbesondere eine erste Querseite der umlaufenden Rahmenstruktur, zumindest einen Einlass und/oder zumindest einen Auslass, vorzugsweise zumindest zwei Auslässe, aufweist, und dass der zumindest eine Einlass und/oder der zumindest eine Auslass strömungstechnisch mit den in dem Boden angeordneten Kühlkanälen zur Zirkulation von Kühlmittel in den Kühlkanälen verbunden sind. Dies ermöglicht eine in konstruktionstechnischer Hinsicht günstige Anbindung des Batterieträgers an einen Kühlkreislauf zur Kühlung der in dem Batterieträger angeordneten Batteriemodule.

Bei einer weiteren vorteilhaften Ausgestaltung der Erfindung weist eine erste Querseite zumindest einen im Wesentlichen mittig angeordneten Einlass und zwei zu dem Einlass jeweils seitlich angeordnete Auslässe auf, wobei in dem Boden angeordnete Kühlstege das Kühlmittel in zumindest einen im Wesentlichen ersten Strömungspfad und einen im Wesentlichen zweiten Strömungspfad teilen, wobei der erste Strömungspfad mit dem Einlass und einem ersten Auslass strömungstechnisch verbunden ist, und dass der zweite Strömungspfad mit dem Einlass und einem zweiten Auslass strömungstechnisch verbunden ist. Hierdurch können von der Mitte des Bodens, insbesondere von der Mitte des Bodens einer Querseite, des Batterieträgers verlaufende Kühlkanäle zur Verfügung gestellt werden, die schleifenförmig zunächst zu der gegenüberliegenden Seite des Bodens verlaufen und anschließend wieder in den jeweils seitlich neben dem Einlass angeordneten Auslässen münden. Insbesondere kann durch eine derartige Ausgestaltung der Kühlkanäle und das damit verbundene Vorsehen von zumindest zwei Strömungspfaden, eine vorteilhafte Kühlung für die in dem Batterieträger angeordneten Batteriemodule zur Verfügung gestellt werden. Zusätzlich kann zeitgleich das Gewicht des Bodens des Batterieträgers weiter reduziert werden, was sich vorteilhaft auf das Gesamtgewicht des Batterieträgers auswirkt. Auch in gusstechnischer Hinsicht kann eine solche Ausgestaltung zuverlässig umgesetzt werden.

Eine weitere bevorzugte Ausgestaltung der Erfindung ist dadurch gekennzeichnet, dass der erste Strömungspfad und/oder der zweite Strömungspfad einen sich von dem an der ersten Querseite angeordneten Einlass bis im Wesentlichen zur zweiten Querseite erstreckenden Zulaufbereich und einen sich an den Zulaufbereich anschließenden und von der zweiten Querseite bis zu dem ersten Auslass und/oder dem zweiten Auslass erstreckenden Ablaufbereich aufweist, und dass vorzugsweise der Zulaufbereich zwei zumindest teilweise im Wesentlichen parallel zueinander verlaufende Zulaufkanäle und/oder der Ablaufbereich zwei zumindest teilweise im Wesentlich parallel zueinander verlaufende Ablaufkanäle umfasst. Hierdurch wird eine Optimierung der Kühleigenschaften des Bodens des Batterieträgers bei einem möglichst geringen Materialeinsatz und einer damit einhergehenden Gewichtsreduktion des Batterieträgers ermöglicht.

Bei einer weiteren vorteilhaften Ausgestaltung der Erfindung ist der Batterieträger einstückig aus einer Aluminiumlegierung gegossen. In diesem Zusammenhang ist es bevorzugt, dass die Aluminiumlegierung eine Aluminiumgusslegierung der 4000er Serie, eine Aluminiumgusslegierung der 5000er Serie oder eine Aluminiumlegierung der 7000er Serie ist. Des Weiteren ist es bevorzugt, dass die Aluminiumlegierung folgende Zusammensetzung in Gew-% aufweist:

| | |
|---|---|
| Mg | 3,4 bis 4,6; |
| Fe | 1,3 bis 1,7; |
| Si | ≤ 0,2; |
| Cu | ≤ 0,2; |
| Mn | ≤ 0,15; |
| Zn | ≤ 0,3; |
| Ti | ≤ 0,2; sowie |

Rest Al sowie unvermeidbare Verunreinigungen; oder
dass die Aluminiumlegierung folgende Zusammensetzung in Gew.-% aufweist:

| | |
|---|---|
| Si | 8,5 bis 10,5; |
| Mn | 0,3 bis 0,6; |
| Fe | ≤ 0,15; |
| Cu | ≤ 0,05; |
| Mg | ≤ 0,1; |
| Zr | ≤ 0,3; vorzugsweise 0,1 bis 0,3; |
| Zn | ≤ 0,05; |
| Ti | ≤ 0,15; |
| Sr | ≤ 0,03; |
| V | ≤ 0,1; sowie |

Rest Al und unvermeidbare Verunreinigungen.

Ebenfalls kann es sich bei einer solchen Aluminiumlegierung um eine Legierung mit der Bezeichnung AlSi6-11; AlMg2.5-14; AlZn2-6, AlSi9Mn oder AlMg4Fe2 handeln. Vorgenannte Gusslegierungen sind beispielsweise in der Norm DIN EN 1706 definiert. Es hat sich in der Praxis herausgestellt, dass die Verwendung der vorgenannten Aluminiumlegierungen zu einem Batterieträger mit bevorzugten statischen sowie dynamischen Eigenschaften führt, wobei zeitgleich ein reduziertes Gewicht zur Verfügung gestellt werden kann.

Vorgenannte Aufgabe wird gemäß einem zweiten Aspekt der vorliegenden Erfindung durch ein Verfahren zum Druckgießen eines einstückigen und vorgenannten Batterieträgers aus einer Leichtmetallschmelze, insbesondere aus einer Schmelze einer Aluminiumlegierung umfassend die folgenden Schritte, gelöst: Bildung eines Formhohlraums, wobei zur Bildung des Formhohlraums zumindest zwei Formteile derart bewegt werden, dass die zumindest zwei Formteile im Wesentlichen dicht aneinander liegen, wobei vorzugsweise eine durch den Formhohlraum gebildete Sprengfläche zumindest 0,5 m², insbesondere zumindest 0,75 m², besonders bevorzugt zumindest 1 m² aufweist; Einfüllen der Leichtmetallschmelze mittels eines Angusssystems in den Formholraum, Geschlossenhalten des Formhohlraums mit einer Schließkraft von zumindest 4000 t, insbesondere von zumindest 5000 t, besonders bevorzugt von zumindest 6000 t bis die in den Formhohlraum eingefüllte Leichtmetallschmelze im Wesentlichen erstarrt ist; Öffnen des Formhohlraums und Entnahme des in dem Formhohlraum abgeformten Batterieträgers.

Hierdurch lässt sich im Rahmen eines Druckgussverfahrens ein einstückiges Gussteil zur Verfügung stellen, welches einen für elektrisch angetriebene Fahrzeuge ausreichend großen Aufnahmebereich zur Aufnahme von Batteriemodulen aufweist. Ebenfalls können durch hohe Schließkräfte ausreichend große Sprengflächen vorgesehen werden, so dass ein Gussteil gefertigt werden kann, welches einen ausreichend großen Aufnahmebereich beispielsweise zur Aufnahme von Batteriemodulen eines ausschließlich elektrisch angetriebenen Fahrzeugs aufweist.

Hierbei geht die Erfindung von der für die Fachwelt überraschenden Feststellung aus, dass sich ein vorgenannter Batterieträger in einem Stück gießtechnisch basierend auf einem Druckgießverfahren herstellen lässt, obwohl ein solcher Batterieträger einen großen Aufnahmebereich und damit verbunden auch eine große Sprengfläche bei der gusstechnischen Herstellung benötigt.

Bei der Sprengfläche handelt es sich beispielsweise um die projizierten Flächen des Batterieträgers, insbesondere einschließlich der Überläufe, des Gießlaufsystems und der Gießkammer.

Die oben beschriebenen, zunächst grundsätzlich für sich alleine stehenden Ausführungsformen und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Nachfolgend wird die Erfindung anhand von Ausführungsbeispielen zeigenden Zeichnungen näher erläutert. Es zeigen jeweils schematisch:
- Fig. 1: eine schematische Ansicht eines Ausführungsbeispiels eines Batterieträgers in einer perspektivischen Darstellung;
- Fig. 2: eine schematische Vorderansicht des in Fig. 1 dargestellten Ausführungsbeispiels eines Batterieträgers;
- Fig. 3: eine perspektivische Rückansicht des in Fig. 1 dargestellten Ausführungsbeispiels eines Batterieträgers;
- Fig. 4: eine schematische Draufsicht des in Fig. 1 dargestellten Ausführungsbeispiels eines Batterieträgers;
- Fig. 5: eine schematische Ansicht eines weiteren Ausführungsbeispiels eines Batterieträgers in einer perspektivischen Darstellung;
- Fig. 6: eine schematische Vorderansicht des in Fig. 5 dargestellten weiteren Ausführungsbeispiels eines Batterieträgers;
- Fig. 7: eine perspektivische Rückansicht des in Fig. 5 dargestellten Ausführungsbeispiels eines Batterieträgers;
- Fig. 8: eine schematische Draufsicht des in Fig. 5 dargestellten Ausführungsbeispiels eines Batterieträgers; sowie
- Fig. 9: eine schematische Ansicht der Unterseite des in Fig. 5 dargestellten Ausführungsbeispiels eines Batterieträgers.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

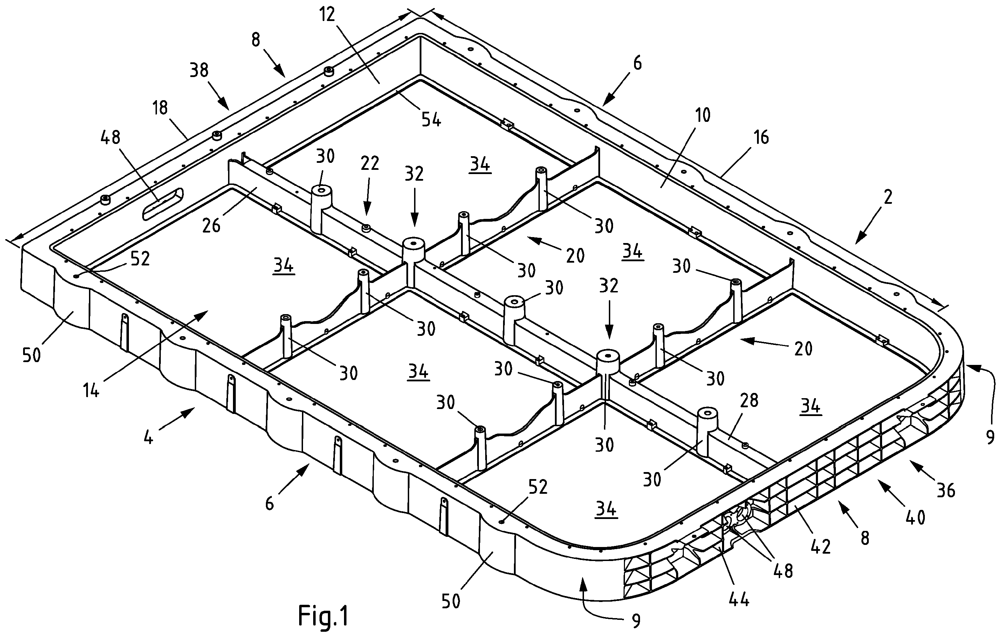

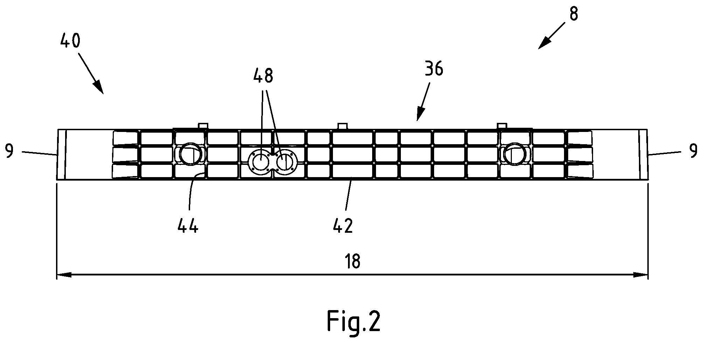

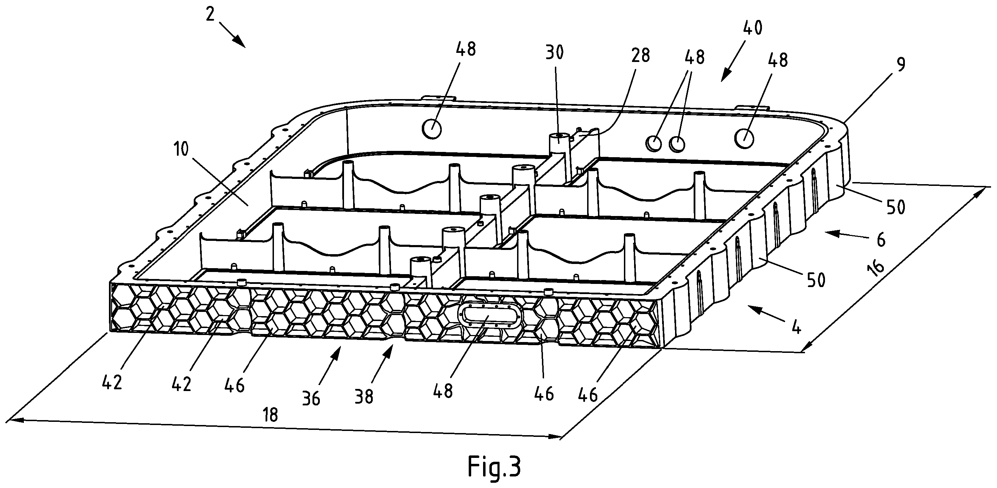

In den Fig. 1 bis 4 sind schematische Ansichten eines ersten Ausführungsbeispiels eines Batterieträgers 2 zur Aufnahme zumindest eines als Antriebsenergiespeicher für ein elektrisch angetriebenes Fahrzeug dienenden Batteriemoduls dargestellt.

Der Batterieträger 2 weist eine umlaufende Rahmenstruktur 4 auf, wobei die umlaufende Rahmenstruktur 4 zwei Längsseiten 6 und zwei Querseiten 8 aufweist. Der Batterieträger 2 ist vorzugsweise einstückig aus einem Leichtmetallwerkstoff, insbesondere aus einer Aluminiumlegierung gegossen. Vorzugsweise weist ein zwischen den Innenseiten 10 der Längsseiten 6 und den Innenseiten 12 der Querseiten 8 aufgespannter Aufnahmebereich 14 eine Fläche von mindestens 0,5 m², insbesondere von zumindest 0,75 m², besonders bevorzugt von zumindest 1 m², auf. In diesem Zusammenhang ist es bevorzugt, falls die Längsseiten 6 eine Länge 16 von größer als 1 m, insbesondere von größer als 1,2 m, besonders bevorzugt von größer als 1,5 m aufweisen und die Querseiten 8 eine Länge 18 von größer als 1 m, insbesondere von größer als 1,25, besonderes bevorzugt von größer als 1,4 m, aufweisen. Zwischen der vorderen Querseite 8 und den Längsseiten 6 sind ferner kurvenförmige Übergangsbereiche 9 angeordnet.

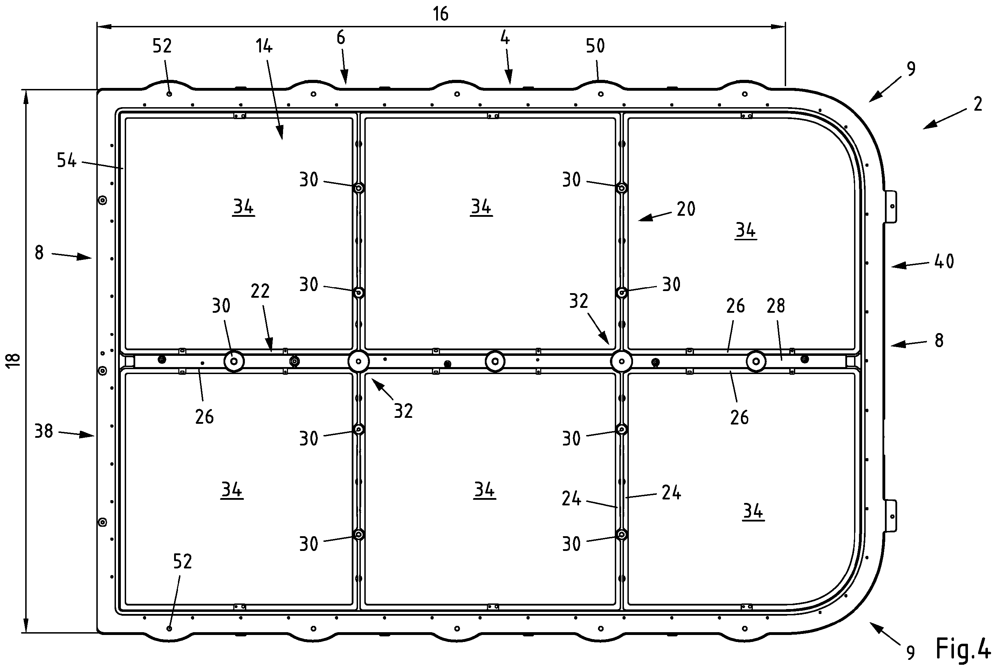

Zwischen den Längsseiten 6 verlaufen zwei Querstege 20 im Wesentlichen parallel zu den Querseiten 8. Ebenfalls verläuft zwischen den Querseiten 8 ein Längssteg 22 im Wesentlichen parallel zu den Längsseiten 6. Die Querstege 20 und der Längssteg 22 weisen jeweils zwei nebeneinander angeordnete Rippen 24 und 26 auf (siehe insbesondere Fig. 4). Die zwei nebeneinander angeordneten Rippen 24 und 26 verlaufen dabei im Wesentlichen parallel zueinander. Die Rippen 26 des Längsstegs 22 sind oberseitig mittels eines Verbindungsstegs 28 miteinander verbunden.

Die Querstege 20 und der Längssteg 22 weisen eine Mehrzahl an zylindrischen Verbindungsabschnitten 30 auf, wobei zwei Verbindungsabschnitte 30 in Kreuzungsbereichen 32 zwischen Querstegen 20 und Längsstegen 22 angeordnet sind. Durch die Querstege 20 und den Längssteg 22 werden insgesamt sechs Abschnitte 34 zur Lagerung von Batteriemodulen gebildet.

Es ist erkennbar, dass die Höhe der Querstege 20 entlang ihrer länglichen Erstreckung variiert. Die Höhe der Querstege 20 ist insbesondere in den Verbindungsabschnitten 30 maximal, wobei die Höhe der Querstege 20 mittig zwischen den Verbindungsabschnitten 30, die nicht in dem Kreuzungsbereich 32 angeordnet sind, minimal ist.

Die Außenseiten der Querseiten 8 weisen eine Profilstruktur 36 zur Versteifung des Batterieträgers 2 auf. Es ist erkennbar, dass die einer Rückseite 38 des Batterieträgers 2 zugeordnete Querseite 8 ein Wabenprofil bildet, wohingegen die einer Vorderseite 40 des Batterieträgers zugeordnete Querseite 8 ein Kastenprofil bildet. Die Profilstrukturen 36 setzen sich aus horizontal verlaufenden Profilstegen 42, aus vertikal verlaufenden Profilstegen 44 und/oder aus im Wesentlichen schräg verlaufenden Profilstegen 46 zusammen.

Des Weiteren weist der Batterieträger 2 eine Mehrzahl an Öffnungen 48 in den Querseiten 8 auf, die beispielsweise der Verbindung von Kühlkanälen zur Kühlung von in dem Batterieträger 2 angeordneten Batteriemodulen und/oder der elektrischen Anbindung von in dem Batterieträger 2 angeordneten Batteriemodulen dienen können.

Zusätzlich sind an der Außenseite der Längsseiten 6 der umlaufenden Rahmenstruktur 4 Verdickungen 50 angeordnet, die die Rahmenstruktur 4 im Bereich von Auswerfermarkierungen 52 verstärken. Die sechs Abschnitte 34 weisen einen umlaufenden Rand 54 auf, welcher dazu dient, die verschiedenen Batteriemodule in den Abschnitten 34 anzuordnen.

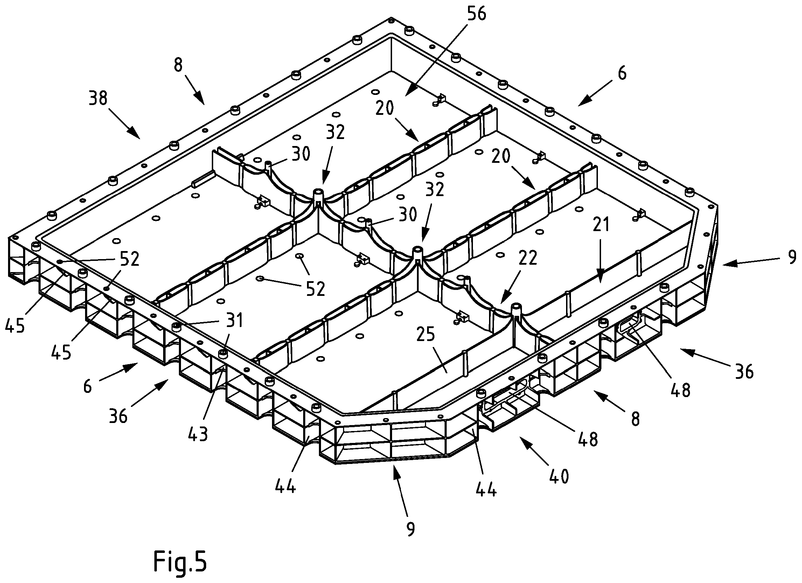

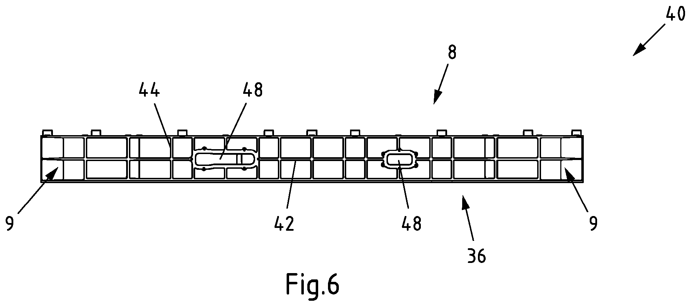

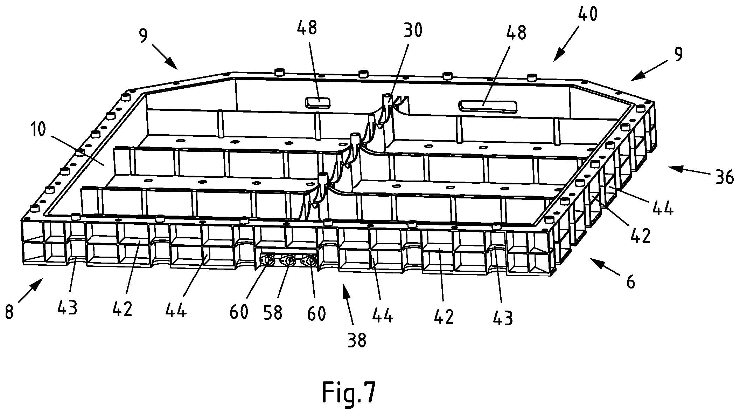

In den Fig. 5 bis 9 sind schematische Ansichten eines zweiten Ausführungsbeispiels eines Batterieträgers 2 zur Aufnahme zumindest eines als Antriebsenergiespeicher für ein elektrisch angetriebenes Fahrzeug dienenden Batteriemoduls dargestellt. Im Nachfolgenden wird daher insbesondere auf die Unterschiede zu dem in den Fig. 1 bis 4 dargestellten ersten Ausführungsbeispiel des Batterieträgers 2 eingegangen.

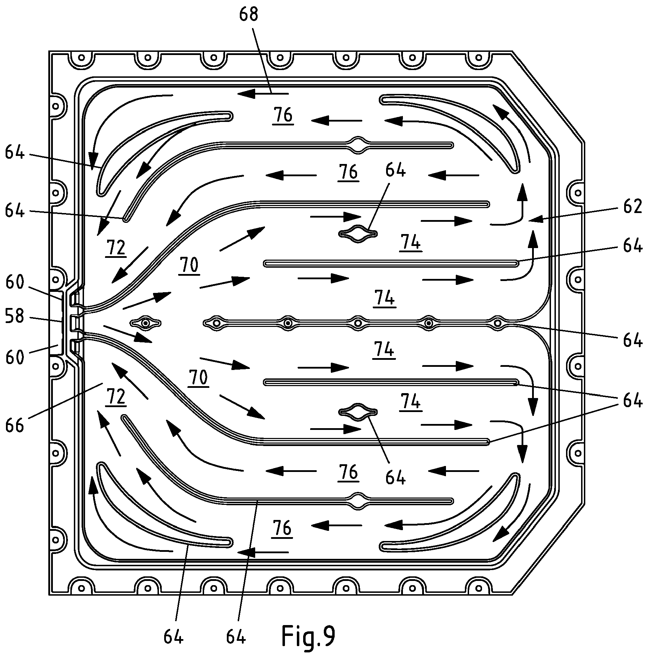

Der Batterieträger 2 umfasst einen Boden 56, wobei der Boden mit einem Einlass 58 und zwei Auslässen 60 verbundene Kühlkanäle 62 aufweist (siehe hierzu insbesondere Fig. 9). Der Einlass 58 und die beiden Auslässe 60 sind in einer Querseite 8 vorgesehen. Dabei ist der Einlass 58 im Wesentlichen mittig in der Querseite 8 angeordnet, wobei die beiden Auslässe 60 seitlich zu dem Einlass 58 beabstandet angeordnet sind.

Ferner weist der Boden 56 mehrere Kühlstege 64 auf, die die Kühlkanäle 62 in im Wesentlichen einen ersten Strömungspfad 66 und in im Wesentlichen einen zweiten Strömungspfad 68 unterteilen. Der erste Strömungspfad 66 ist dabei mit dem Einlass 58 und einem ersten Auslass 60 strömungstechnisch verbunden und der zweite Strömungspfad ist mit dem Einlass 58 und einem zweiten Auslass 60 strömungstechnisch verbunden.

Zudem weisen die beiden Strömungspfade jeweils einen sich von dem Einlass 58 zu der gegenüberliegenden Querseite 8 erstrecken Zulaufbereich 70 und einen sich an den Zulaufbereich 70 von der gegenüberliegenden Querseite 8 zu den Auslässen 60 erstreckenden Ablaufbereich 72 auf. Die Zulaufbereiche 70 und die Ablaufbereiche 72 werden jeweils durch Kühlstege 64 in zumindest zwei im Wesentlichen parallel zueinander verlaufende Zulaufkanäle 74 und zwei im Wesentlichen parallel zueinander verlaufende Ablaufkanäle 76 unterteilt.

Der Übergangsbereich 9 zur Verbindung einer Längsseite 6 mit den beiden Querseiten 8 ist vorliegend im Wesentlichen gerade ausgebildet, wobei der Übergangsbereich 9 mit den beiden Querseiten 8 und der Längsseite 6 an den inneren Seitenflächen einen Winkel von kleiner als 180° einschließt. Dies führt dazu, dass sich der Aufnahmebereich 14 im Übergangsbereich 9 verkleinert.

Im Unterschied zu dem in den Fig. 1 bis 4 dargestellten Ausführungsbeispiel weist der Batterieträger 2 an seiner gesamten umlaufenden Rahmenstruktur 4 eine Profilstruktur 36 auf. Demnach ist die Profilstruktur 36 auch bei den Längsseiten 6 und in dem Übergangsbereich 9 vorgesehen. Die Profilstruktur 36 ist insbesondere als Kastenprofil umfassend horizontal verlaufende Profilstege 42 und vertikal verlaufende Profilstege 44 ausgebildet. Des Weiteren sind horizontale Profilstege 43 insbesondere unterhalb von auf der umlaufenden Rahmenstruktur 4 angeordneten Verbindungsabschnitten 31 vorgesehen.

Ebenfalls weist die der Längsseiten 6 zugeordnete Profilstruktur 36 im Wesentlichen dreieckförmig und vertikal verlaufende Verstärkungsstege 45 auf, die jeweils einer Auswerfermarkierung 52 der umlaufenden Rahmenstruktur 4 zugeordnet sind.

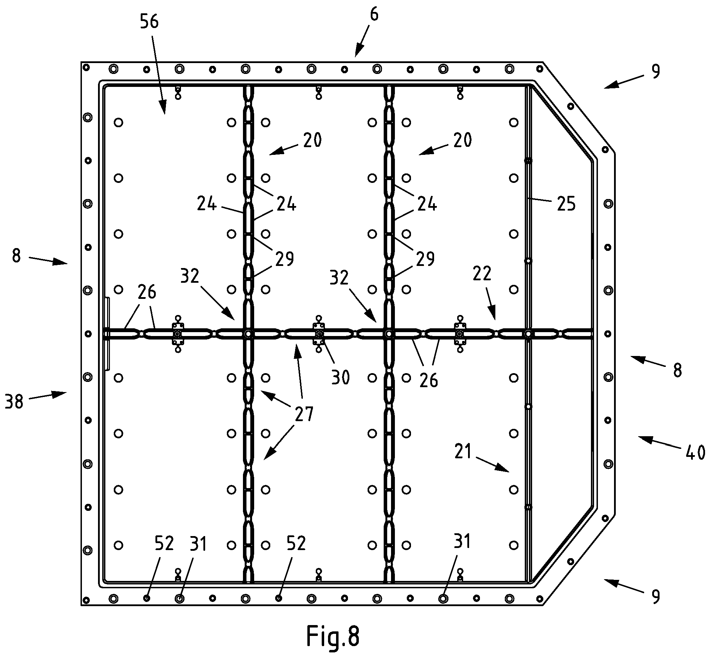

Die Querstege 20 und 21 sowie der Längssteg 22 weisen jeweils zwei nebeneinander angeordnete Rippen 24, 25 und 26 auf. Insbesondere aus Fig. 8 ist erkennbar, dass die Rippen 24 der Querstege 20 und die Rippen 26 des Längsstegs 22 im Wesentlichen hintereinander angeordnete O-förmige Rippenstrukturen 27 bilden. Die O-förmigen Rippenstrukturen 27 der Querstege 20 weisen einen orthogonal zu der länglichen Erstreckung der Querstege 20 mittig verlaufenden Steg 29 auf.

Zusätzlich weisen die Rippen 26 des Längsstegs 22 eine variierende Höhe auf, wobei die Höhe des Längsstegs 22 insbesondere in den Verbindungsabschnitten 30 maximal ist und die Höhe der Rippen 26 des Längsstegs 22 mittig zwischen den Verbindungsabschnitten 30 minimal ist.

An der Vorderseite 40 des Batterieträgers 2 sind ferner zwei als Langlöcher ausgestaltete Öffnungen 48 vorgesehen, die beispielsweise der elektrischen Anbindung der in dem Batterieträger 2 angeordneten Batteriemodule an das Fahrzeug dienen können.

Die in dieser Spezifikation beschriebenen beispielhaften Ausführungsformen/Ausführungsbeispiele der vorliegenden Erfindung sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

Der Schutzumfang der vorliegenden Erfindung ist nur durch den Gegenstand der beigefügten Ansprüche definiert und begrenzt.

## Patentansprüche

1. Batterieträger (2) zur Aufnahme zumindest eines als Antriebsenergiespeicher für ein elektrisch angetriebenes Fahrzeug dienenden Batteriemoduls, wobei der Batterieträger (2) mit einer Karosserie des Fahrzeugs verbindbar ist, umfassend:
- eine im Wesentlichen umlaufende Rahmenstruktur (4) aufweisend Längsseiten (6) und Querseiten (8) zur Bildung eines Aufnahmebereichs (14) für das zumindest eine Batteriemodul,
- wobei der Aufnahmebereich (14) eine Fläche von mindestens 0,5 m², insbesondere von zumindest 0,75 m², besonders bevorzugt von zumindest 1 m² einschließt, und
- wobei der Batterieträger zumindest einen Quersteg (20) und/oder zumindest einen Längssteg (22) zur Versteifung des Batterieträgers (2) und/oder zur Anbindung des Batterieträgers (2) an die Karosserie des Fahrzeugs aufweist,
**dadurch gekennzeichnet,**
- **dass** der Batterieträger (2) einstückig aus einem Leichtmetallwerkstoff gegossen ist, und
- **dass** die Außenseite der umlaufenden Rahmenstruktur (4) zumindest teilweise eine Profilstruktur (36) zur Versteifung des Batterieträgers (2) aufweist.

2. Batterieträger nach Anspruch 1,
**dadurch gekennzeichnet,**
- **dass** der zumindest eine Quersteg (20) im Wesentlichen parallel zu zumindest einer Querseite (8) verläuft und/oder der zumindest eine Längssteg (22) im Wesentlichen parallel zu zumindest einer Längsseite (6) verläuft.

3. Batterieträger nach Anspruch 2, **dadurch gekennzeichnet,**
- **dass** zumindest zwei, insbesondere im Wesentlichen nebeneinander angeordnete, Rippen (24, 26) den zumindest einen Quersteg (20) und/oder den zumindest einen Längssteg (22) bilden, und
- **dass** vorzugsweise die zumindest zwei Rippen (24, 26) derart zueinander angeordnet sind, dass der Quersteg (20) und/oder der Längssteg (22) eine Mehrzahl an im Wesentlichen O-förmigen Rippenstrukturen (27) aufweist.

4. Batterieträger nach Anspruch 2 oder 3, **dadurch gekennzeichnet,**
- **dass** mindestens ein Verbindungsabschnitt (30) zur Verbindung des Batterieträgers (2) mit der Karosserie des Fahrzeugs in einem Kreuzungsbereich (32) des zumindest einen Querstegs (20) mit dem zumindest einen Längssteg (22) angeordnet ist, und
- **dass** vorzugweise der mindestens eine Verbindungsabschnitt (30) im Wesentlichen zylinderförmig ausgebildet ist.

5. Batterieträger nach einem der Ansprüche 2 bis 4, **dadurch gekennzeichnet,**
- **dass** die Höhe des zumindest einen Querstegs (20) entlang der länglichen Erstreckung des zumindest einen Querstegs (20) variiert und/oder
- **dass** die Höhe des zumindest einen Längsstegs (22) entlang der länglichen Erstreckung des zumindest einen Längsstegs (22) variiert.

6. Batterieträger nach Anspruch 5, **dadurch gekennzeichnet,**
- **dass** der zumindest eine Quersteg (20) und/oder der zumindest eine Längssteg (22) Verbindungsabschnitte (30) zur Verbindung des Batterieträgers (2) mit der Karosserie des Fahrzeugs aufweisen, und
- **dass** vorzugsweise die Höhe des zumindest einen Querstegs (20) und/oder des zumindest einen Längsstegs (22) in den Verbindungsabschnitten (30) im Wesentlichen maximal ist; und/oder
- **dass** vorzugsweise die Höhe des zumindest einen Querstegs (20) und/oder des zumindest einen Längsstegs (22) im Wesentlichen mittig zwischen den Verbindungsabschnitten (30) minimal ist.

7. Batterieträger nach einem der Ansprüche 1 bis 6, **dadurch gekennzeichnet,**
- **dass** die Profilstruktur (36) insbesondere im Wesentlichen horizontal verlaufende Profilstege (42) und/oder im Wesentlichen vertikal verlaufende Profilstege (44) umfasst, und
- **dass** vorzugweise die im Wesentlichen horizontal und/oder vertikal verlaufenden Profilstege (42, 44) im Wesentlichen ein Kastenprofil oder ein Wabenprofil bilden.

8. Batterieträger nach Anspruch 7, **dadurch gekennzeichnet,**
- **dass** die Länge der im Wesentlichen horizontal verlaufenden Profilstege (42) zueinander variiert, und/oder
- **dass** die Länge der im Wesentlichen vertikal verlaufenden Profilstege (44) variiert.

9. Batterieträger nach Anspruch 7 oder 8, **dadurch gekennzeichnet,**
- **dass** die Profilstruktur (36) im Wesentlichen vertikale Verstärkungsstege (45) aufweist, wobei die im Wesentlichen vertikalen Verstärkungsstege (45) Auswerfermarkierungen (52) der umlaufenden Rahmenstruktur (4) zugeordnet sind.

10. Batterieträger nach einem der Ansprüche 1 bis 9, **dadurch gekennzeichnet,**
- **dass** der Batterieträger (2) ferner einen Boden (56) umfasst, und
- **dass** der Boden vorzugsweise (56) Kühlkanäle (62) zur Kühlung von in dem Batterieträger (2) aufgenommenen Batteriemodulen aufweist.

11. Batterieträger nach Anspruch 10, **dadurch gekennzeichnet,**
- **dass** die umlaufende Rahmenstruktur (4), insbesondere eine erste Querseite (8) der umlaufenden Rahmenstruktur (4), zumindest einen Einlass (58) und/oder zumindest einen Auslass (60), vorzugsweise zumindest zwei Auslässe (60), aufweist, und
- **dass** der zumindest eine Einlass (58) und/oder der zumindest eine Auslass (60) strömungstechnisch mit den in dem Boden (56) angeordneten Kühlkanälen (62) zur Zirkulation von Kühlmittel in den Kühlkanälen (62) verbunden ist/sind.

12. Batterieträger nach Anspruch 11,
**dadurch gekennzeichnet,**
- **dass** eine erste Querseite (8) zumindest einen im Wesentlichen mittig angeordneten Einlass (58) und zwei zu dem Einlass (58) jeweils seitlich angeordnete Auslässe (60) aufweist, und
- **dass** in dem Boden (56) angeordnete Kühlstege (64) die Kühlkanäle (62) in zumindest einen im Wesentlichen ersten Strömungspfad (66) und einen im Wesentlichen zweiten Strömungspfad (68) teilen,
- **dass** der erste Strömungspfad (66) mit dem Einlass (58) und einem ersten Auslass (60) strömungstechnisch verbunden ist, und
- **dass** der zweite Strömungspfad (68) mit dem Einlass (58) und einem zweiten Auslass (60) strömungstechnisch verbunden ist.

13. Batterieträger nach Anspruch 12, **dadurch gekennzeichnet,**
- **dass** der erste Strömungspfad (66) und/oder der zweite Strömungspfad (68) einen sich von dem an der ersten Querseite (8) angeordneten Einlass (58) bis im Wesentlichen zur zweiten Querseite (8) erstreckenden Zulaufbereich (70) und einen sich an den Zulaufbereich (70) anschließenden und von der zweiten Querseite (8) bis zu dem ersten Auslass (60) und/oder dem zweiten Auslass (6) erstreckenden Ablaufbereich (72) aufweist, und
- **dass** vorzugsweise der Zulaufbereich (70) zwei zumindest teilweise im Wesentlichen parallel zueinander verlaufende Zulaufkanäle (74) und/oder der Ablaufbereich (72) zwei zumindest teilweise im Wesentlich parallel zueinander verlaufende Ablaufkanäle (76) umfasst.

14. Batterieträger nach einem der Ansprüche 1 bis 13, **dadurch gekennzeichnet,**
- **dass** der Batterieträger einstückig aus einer Aluminiumlegierung gegossen ist; und
- **dass** die Aluminiumlegierung vorzugsweise eine Aluminiumgusslegierung der 4000er Serie, eine Aluminiumgusslegierung der 5000er Serie oder eine Aluminiumlegierung der 7000er Serie ist; und/oder
- **dass** die Aluminiumlegierung folgende Zusammensetzung in Gew-% aufweist:
| | |
|---|---|
| Mg | 3,4 bis 4,6; |
| Fe | 1,3 bis 1,7; |
| Si | ≤ 0,2; |
| Cu | ≤ 0,2; |
| Mn | ≤ 0,15; |
| Zn | ≤ 0,3; |
| Ti | ≤ 0,2; sowie |
Rest Al sowie unvermeidbare Verunreinigungen; oder
- **dass** die Aluminiumlegierung folgende Zusammensetzung in Gew.-% aufweist:
| | |
|---|---|
| Si | 8,5 bis 10,5; |
| Mn | 0,3 bis 0,6; |
| Fe | ≤ 0,15; |
| Cu | ≤ 0,05; |
| Mg | ≤ 0,1; |
| Zr | ≤ 0,3; vorzugsweise 0,1 bis 0,3; |
| Zn | ≤ 0,05; |
| Ti | ≤ 0,15; |
| Sr | ≤ 0,03; |
| V | ≤ 0,1; sowie |
Rest Al und unvermeidbare Verunreinigungen.

15. Verfahren zum Druckgießen eines einstückigen Batterieträgers nach einem der Ansprüche 1 bis 14 aus einer Leichtmetallschmelze, insbesondere aus einer Schmelze einer Aluminiumlegierung umfassend die folgenden Schritte:- Bildung eines Formhohlraums, wobei zur Bildung des Formhohlraums zumindest zwei Formteile derart bewegt werden, dass die zumindest zwei Formteile im Wesentlichen dicht aneinander liegen, wobei eine durch den Formhohlraum zumindest teilweise gebildete Sprengfläche zumindest 0,5 m², insbesondere zumindest 0,75 m², besonders bevorzugt zumindest 1 m² aufweist;
- Einfüllen der Leichtmetallschmelze mittels eines Angusssystems in den Formholraum,
- Geschlossenhalten des Formhohlraums mit einer Schließkraft von zumindest 4000 t, insbesondere von zumindest 5000 t, besonders bevorzugt von zumindest 6000 t bis die in den Formhohlraum eingefüllte Leichtmetallschmelze im Wesentlichen erstarrt ist;
- Öffnen des Formhohlraums und Entnahme des in dem Formhohlraum abgeformten Batterieträgers.

## Claims

1. Battery support (2) intended to receive at least one battery module serving as a motive power reservoir for an electrically propelled vehicle, the battery support (2) being connectable to a vehicle body, comprising:
- an essentially peripheral frame structure (4) having longitudinal sides (6) and transverse sides (8) to form a receiving area (14) for the at least one battery module,
- the receiving area (14) having a surface area of at least 0.5 m², in particular at least 0.75 m², preferably at least 1 m², and
- the battery support comprising at least one transverse cross member (20) and/or at least one longitudinal cross member (22) to stiffen the battery support (2) and/or to connect the battery support (2) to the vehicle body,
**characterized in that**
- the battery support (2) is molded in one piece from a lightweight metal material, and
- the outer face of the peripheral frame structure (4) comprises at least in part a profiled structure (36) for stiffening the battery support (2).

2. Battery support according to claim 1,
**characterized in that**
- the at least one transverse cross member (20) extends essentially parallel to at least one transverse side (8) and/or the at least one longitudinal cross member (22) extends essentially parallel to at least one longitudinal side (6).

3. Battery support according to claim 2, **characterized in that**
- at least two ribs (24, 26), arranged in particular substantially next to each other, form the at least one transverse cross member (20) and/or the at least one longitudinal cross member (22), and
- that at least two ribs (24, 26) are preferably arranged relative to each other such that the transverse cross member (20) and/or the longitudinal cross member (22) has a plurality of essentially O-shaped rib structures (27).

4. Battery support according to claim 2 or 3, **characterized in that**
- at least one connecting section (30) for connecting the battery support (2) to the vehicle body is arranged in an intersection area (32) between at least one transverse cross member (20) and at least one longitudinal cross member (22), and
- preferably, the at least one connecting section (30) is designed to be essentially cylindrical.

5. Battery support according to one of claims 2 to 4, **characterized in that**
- the height of the at least one transverse cross member (20) varies along the longitudinal extension of the at least one transverse cross member (20) and/or
- the height of the at least one longitudinal cross member (22) varies along the longitudinal extension of the at least one longitudinal cross member (22).

6. Battery support according to claim 5, **characterized in that**
- **in that** the at least one transverse cross member (20) and/or the at least one longitudinal cross member (22) comprise connecting sections (30) for connecting the battery support (2) to the vehicle body, and
- preferably, the height of the at least one transverse cross member (20) and/or the at least one longitudinal cross member (22) in the connecting sections (30) is essentially maximum; and/or
- preferably, the height of the at least one transverse cross member (20) and/or the at least one longitudinal cross member (22) is substantially minimal at the center between the connecting sections (30).

7. Battery support according to one of claims 1 to 6, **characterized in that**
- **in that** the profiled structure (36) comprises in particular profiled ribs (42) extending essentially horizontally and/or profiled ribs (44) extending essentially vertically, and
- the profiled ribs (42, 44) extending essentially horizontally and/or vertically preferably form essentially a box profile or a honeycomb profile.

8. Battery support according to claim 7, **characterized in that**
- the length of the profiled ribs (42) extending essentially horizontally varies in relation to each other, and/or
- the length of the profiled ribs (44) extending essentially vertically varies.

9. Battery support according to claim 7 or 8, **characterized in that**
- the profiled structure (36) has essentially vertical reinforcement ribs (45), the essentially vertical reinforcement ribs (45) being associated with ejection marks (52) on the peripheral frame structure (4).

10. Battery support according to one of claims 1 to 9, **characterized in that**
- the battery support (2) further comprises a bottom (56), and
- the bottom (56) preferably comprises cooling channels (62) for cooling the battery modules housed in the battery support (2).

11. Battery support according to claim 10, **characterized in that**
- the peripheral frame structure (4), in particular a first transverse side (8) of the peripheral frame structure (4), has at least one inlet (58) and/or at least one outlet (60), preferably at least two outlets (60), and
- at least one inlet (58) and/or at least one outlet (60) are connected fluidly to the cooling channels (62) arranged in the base (56) for the circulation of the cooling fluid in the cooling channels (62).

12. Battery support according to claim 11,
**characterized in that**
- a first transverse side (8) has at least one inlet (58) arranged substantially in the center and two outlets (60) arranged laterally with respect to the inlet (58), and
- cooling ribs (64) arranged in the bottom (56) divide the cooling channels (62) into at least a first flow path (66) and a second flow path (68),
- the first flow path (66) is connected to the inlet (58) and to a first outlet (60) in the flow plane, and
- the second flow path (68) is connected to the inlet (58) and to a second outlet (60) fluidly.

13. Battery support according to claim 12, **characterized in that**
- the first flow path (66) and/or the second flow path (68) comprise a supply zone (70) extending from the inlet (58) arranged on the first transverse side (8) to essentially the second transverse side (8) and a flow zone (72) connecting to the supply zone (70) and extending from the second transverse side (8) to the first outlet (60) and/or the second outlet (60), and
- that, preferably, the inlet zone (70) comprises two inlet channels (74) extending at least in part substantially parallel to each other and/or the outlet zone (72) comprises two outlet channels (76) extending at least in part substantially parallel to each other.

14. Battery support according to one of claims 1 to 13, **characterized in that**
- the battery support is molded in one piece from aluminum alloy; and
- the aluminum alloy is preferably a cast aluminum alloy of the 4000 series, a cast aluminum alloy of the 5000 series, or an aluminum alloy of the 7000 series; and/or
- the aluminum alloy has the following composition in % by weight:
| | |
|---|---|
| Mg | 3.4 to 4.6; |
| Fe | 1.3 to 1.7; |
| Si | ≤ 0.2; |
| Cu | ≤ 0.2; |
| Mn | ≤ 0.15; |
| Zn | ≤ 0.3; |
| Ti | ≤ 0.2; as well as |
the remainder consisting of Al and unavoidable impurities; or
- the aluminum alloy has the following composition in % by weight:
| | |
|---|---|
| Si | 8.5 to 10.5; |
| Mn | 0.3 to 0.6; |
| Fe | ≤ 0.15; |
| Cu | ≤ 0.05; |
| Mg | ≤ 0.1; |
| Zr | ≤ 0.3; preferably 0.1 to 0.3; |
| Zn | ≤ 0.05; |
| Ti | ≤ 0.15; |
| Sr | ≤ 0.03; |
| V | ≤ 0.1; as well as |
residual Al and unavoidable impurities.

15. Method for die casting a monolithic battery support according to one of claims 1 to 14 from molten light metal, in particular from molten aluminum alloy, comprising the following steps:- Formation of a molding cavity, wherein, to form the molding cavity, at least two mold parts are moved such that the at least two mold parts are substantially close to each other, a bursting surface formed at least in part by the molding cavity having at least 0.5 m², in particular at least 0.75 m² preferably at least 1 m²;
- Filling the mold cavity with molten light metal using a feeding system,
- Keeping the mold cavity closed with a closing force of at least 4000 t, in particular at least 5000 t, preferably at least 6000 t, until the molten light metal poured into the mold cavity has substantially solidified;
- opening the mold cavity and removing the battery support molded in the mold cavity.

## Revendications

1. Support de batterie (2) destiné à recevoir au moins un module de batterie servant de réservoir d'énergie motrice pour un véhicule à propulsion électrique, le support de batterie (2) pouvant être relié à une carrosserie du véhicule, comprenant :
- une structure de cadre essentiellement périphérique (4) présentant des côtés longitudinaux (6) et des côtés transversaux (8) pour former une zone de réception (14) pour le au moins un module de batterie,
- la zone de réception (14) ayant une surface d'au moins 0,5 m² , en particulier d'au moins 0,75 m² , de préférence d'au moins 1 m² , et
- le support de batterie comportant au moins une traverse (20) et/ou au moins une traverse longitudinale (22) pour rigidifier le support de batterie (2) et/ou pour relier le support de batterie (2) à la carrosserie du véhicule,
**caractérisé en ce que**
- le support de batterie (2) est moulé d'un seul tenant dans un matériau métallique léger, et
- que la face extérieure de la structure de cadre périphérique (4) comporte au moins en partie une structure profilée (36) pour rigidifier le support de batterie (2).

2. Support de batterie selon la revendication 1,
**caractérisé en ce que**
- **en ce que** la au moins une traverse (20) s'étend essentiellement parallèlement à au moins un côté transversal (8) et/ou la au moins une traverse longitudinale (22) s'étend essentiellement parallèlement à au moins un côté longitudinal (6).

3. Support de batterie selon la revendication 2,
**caractérisé en ce que**
- au moins deux nervures (24, 26), disposées en particulier sensiblement l'une à côté de l'autre, forment la au moins une traverse (20) et/ou la au moins une traverse longitudinale (22), et
- que les au moins deux nervures (24, 26) sont de préférence disposées l'une par rapport à l'autre de telle sorte que la traverse (20) et/ou la traverse longitudinale (22) présente une pluralité de structures nervurées (27) essentiellement en forme de O.

4. Support de batterie selon la revendication 2 ou 3,
**caractérisé en ce que**
- qu'au moins une section de jonction (30) destinée à relier le support de batterie (2) à la carrosserie du véhicule est disposée dans une zone d'intersection (32) entre au moins une traverse (20) et au moins une traverse longitudinale (22), et
- que, de préférence, la au moins une partie de jonction (30) est réalisée de manière essentiellement cylindrique.

5. Support de batterie selon l'une des revendications 2 à 4,
**caractérisé en ce que**
- que la hauteur de la au moins une traverse (20) varie le long de l'extension longitudinale de la au moins une traverse (20) et/ou
- **en ce que** la hauteur de la au moins une traverse longitudinale (22) varie le long de l'extension longitudinale de la au moins une traverse longitudinale (22).

6. Support de batterie selon la revendication 5,
**caractérisé en ce que**
- **en ce que** la au moins une traverse (20) et/ou la au moins une traverse longitudinale (22) comportent des sections de jonction (30) pour relier le support de batterie (2) à la carrosserie du véhicule, et
- que de préférence, la hauteur de la au moins une traverse (20) et/ou de la au moins une traverse longitudinale (22) est essentiellement maximale dans les sections de jonction (30) ; et/ou
- que, de préférence, la hauteur de la au moins une traverse (20) et/ou de la au moins une traverse longitudinale (22) est sensiblement minimale au centre entre les sections de jonction (30).

7. Support de batterie selon l'une des revendications 1 à 6,
**caractérisé en ce que**
- **en ce que** la structure profilée (36) comprend en particulier des âmes profilées (42) s'étendant essentiellement horizontalement et/ou des âmes profilées (44) s'étendant essentiellement verticalement, et
- que les âmes profilées (42, 44) s'étendant essentiellement horizontalement et/ou verticalement forment de préférence essentiellement un profilé en caisson ou un profilé en nid d'abeilles.

8. Support de batterie selon la revendication 7,
**caractérisé en ce que**
- que la longueur des âmes profilées (42) s'étendant essentiellement horizontalement varie les unes par rapport aux autres, et/ou
- que la longueur des âmes profilées (44) s'étendant essentiellement verticalement varie.

9. Support de batterie selon la revendication 7 ou 8,
**caractérisé en ce que**
- que la structure profilée (36) présente des âmes de renfort (45) essentiellement verticales, les âmes de renfort (45) essentiellement verticales étant associées à des repères d'éjection (52) de la structure de cadre périphérique (4).

10. Support de batterie selon l'une des revendications 1 à 9,
**caractérisé en ce que**
- que le support de batterie (2) comprend en outre un fond (56), et
- que le fond (56) comporte de préférence des canaux de refroidissement (62) pour refroidir les modules de batterie logés dans le support de batterie (2).

11. Support de batterie selon la revendication 10,
**caractérisé en ce que**
- que la structure de cadre périphérique (4), en particulier un premier côté transversal (8) de la structure de cadre périphérique (4), comporte au moins une entrée (58) et/ou au moins une sortie (60), de préférence au moins deux sorties (60), et
- qu'au moins une entrée (58) et/ou au moins une sortie (60) sont reliées, du point de vue de la technique des fluides, aux canaux de refroidissement (62) disposés dans le fond (56) pour la circulation du fluide de refroidissement dans les canaux de refroidissement (62).

12. Support de batterie selon la revendication 11,
**caractérisé en ce que**
- qu'un premier côté transversal (8) comporte au moins une entrée (58) disposée sensiblement au centre et deux sorties (60) disposées latéralement par rapport à l'entrée (58), et
- des âmes de refroidissement (64) disposées dans le fond (56) divisent les canaux de refroidissement (62) en au moins un premier chemin d'écoulement (66) et un deuxième chemin d'écoulement (68),
- que le premier chemin d'écoulement (66) est relié à l'entrée (58) et à une première sortie (60) sur le plan de la technique des fluides, et
- que le deuxième chemin d'écoulement (68) est relié à l'entrée (58) et à une deuxième sortie (60) sur le plan de la technique des fluides.

13. Support de batterie selon la revendication 12,
**caractérisé en ce que**
- que le premier chemin d'écoulement (66) et/ou le deuxième chemin d'écoulement (68) comporte une zone d'alimentation (70) s'étendant de l'entrée (58) disposée sur le premier côté transversal (8) jusqu'essentiellement au deuxième côté transversal (8) et une zone d'écoulement (72) se raccordant à la zone d'alimentation (70) et s'étendant du deuxième côté transversal (8) jusqu'à la première sortie (60) et/ou la deuxième sortie (60), et
- que, de préférence, la zone d'alimentation (70) comprend deux canaux d'entrée (74) s'étendant au moins en partie sensiblement parallèlement l'un à l'autre et/ou la zone d'écoulement (72) comprend deux canaux de départ (76) s'étendant au moins en partie sensiblement parallèlement l'un à l'autre.

14. Support de batterie selon l'une des revendications 1 à 13,
**caractérisé en ce que**
- que le support de batterie est moulé d'une seule pièce en alliage d'aluminium ; et
- que l'alliage d'aluminium est de préférence un alliage d'aluminium moulé de la série 4000, un alliage d'aluminium moulé de la série 5000 ou un alliage d'aluminium de la série 7000 ; et/ou
- que l'alliage d'aluminium présente la composition suivante en % en poids :
| | |
|---|---|
| Mg | 3,4 à 4,6 ; |
| Fe | 1,3 à 1,7 ; |
| Si | ≤ 0,2 ; |
| Cu | ≤ 0,2 ; |
| Mn | ≤ 0,15 ; |
| Zn | ≤ 0,3 ; |
| Ti | ≤ 0,2 ; ainsi que |
le reste d'Al et d'impuretés inévitables ; ou
- que l'alliage d'aluminium présente la composition suivante en % en poids :
| | |
|---|---|
| Si | 8,5 à 10,5 ; |
| Mn | 0,3 à 0,6 ; |
| Fe | ≤ 0,15; |
| Cu | ≤ 0,05; |
| Mg | ≤ 0,1 ; |
| Zr | ≤ 0,3 ; de préférence 0,1 à 0,3 ; |
| Zn | ≤ 0,05 ; |
| Ti | ≤ 0,15 ; |
| Sr | ≤ 0,03 ; |
| V | ≤ 0,1 ; ainsi que |
reste d'Al et impuretés inévitables.

15. Procédé de moulage sous pression d'un support de batterie essentiellement monobloc selon l'une des revendications 1 à 14 à partir d'un métal léger fondu, en particulier à partir d'un alliage d'aluminium fondu, comprenant les étapes suivantes :
- Formation d'une cavité de moulage, dans laquelle, pour former la cavité de moulage, au moins deux parties de moule sont déplacées de telle sorte que les au moins deux parties de moule soient essentiellement proches l'une de l'autre, une surface d'éclatement formée au moins en partie par la cavité de moulage présentant au moins 0,5 m² , en particulier au moins 0,75 m², de préférence au moins 1 m² ;
- Remplissage de la cavité du moule avec le métal léger en fusion à l'aide d'un système d'injection,
- Maintien de la cavité du moule fermée avec une force de fermeture d'au moins 4000 t, en particulier d'au moins 5000 t, de préférence d'au moins 6000 t, jusqu'à ce que le métal léger en fusion versé dans la cavité du moule soit pratiquement solidifié ;
- ouverture de la cavité du moule et retrait du support de batterie moulé dans la cavité du moule.
